# EUROPEAN PATENT APPLICATION

(11) **EP 3 387 905 A1**
(43) Date of publication of application: **17.10.2018**
(21) Application number: 18167057.1
(22) Date of filing: 12.04.2018
(51) Int. Cl.: A01N 25/30, A01N 33/12, A01P 1/00, A01P 13/00

(54) **WATER-BASED ANTI-ALGAE LIQUID**

(30) Priority: 12.04.2017 DK PA201770262
(71) Applicant: ARS Holding Kolding A/S, 6000 Kolding (DK)
(72) Inventor: Reinert, Joen, 6091 Bjert (DK)
(74) Representative: Tellefsen, Jens J.

(57) **Abstract**

A water-based anti-algae liquid comprising the following constituents in percentage by weight:
a. 1% to 20% DDAC;
b. 0% to 5% hydrotopes/surfactants
c. The remainder water

## Description

### Field of the Invention

The present invention discloses a water-based anti-algae liquid as well as the use of the water-based anti-algae liquid and furthermore suggests how to apply the anti-algae liquid to various surfaces.

### Background of the Invention

It is a well-known problem that over time various surfaces will be covered by a slightly green layer caused by algae growth. Apart from providing a non-wanted appearance the green layer that usually consists of various types of algae is also detrimental to the constructional performance of the algae-covered parts. For example if algae growth is allowed on a brick-wall the mortar between the bricks becomes increasingly porous such that normal weathering may erode the joints thereby weakening the entire brick-wall.

The same is naturally true for various types of wall cladding where the algae growth gives rise to retaining water/moisture during winters, which may cause extra or aggravated problems relating to frost and thaw. In general algae growth is unwanted.

In the market a number of products exist which aim at removing algae growth and providing preventive treatment such that algae will find it harder to establish colonies on the treated surfaces. As all these products have to fulfil requirements relating to how environmentally hazardous these products are they usually do not provide an effective treatment against algae growth as it is necessary for these products not to be hazardous to the ambient environment, particularly the soil and the groundwater.

The result, therefore, is that although they may be effective for a very short time these products do not effectively prevent algae growth and they do not effectively exterminate the algae already in place.

### Object of the Invention

It is therefore an object of the present invention to provide a novel anti-algae liquid which is water-based and which both provide effective treatment of algae already established on various surfaces but also provides preventive measures such that new or renewed algae growth is more or less eliminated.

### Description of the Invention

The invention addresses this by providing a water-based anti-algae liquid comprising the following constituents in percentage by weight:
a. 1% to 20% DDAC;
b. 0,01% to 5% hydrotopes/surfactants
c. The remainder water

In this liquid it is particularly the active ingredient DDAC which is important. DDAC is short for didecyldimethylammonium chloride which is registered under CAS no. 7173-51-5. This product is a biocide which is classified as a biocide PT2. The definition of PT2 is as "used for the disinfection of surfaces, materials, equipment and furniture which are not used for direct contact with food or feeding stuffs. Usage areas include swimming pools, aquariums, bathing or other waters, airconditioning systems and walls and floors in private, public and industrial areas and in other areas for professional activities."

The DDAC is regulated under the EU biocide regulation (EU528/2012).

By combining the active ingredient DDAC with a surfactant in a water-diluted suspension a very effective composition is provided. In the art DDAC has been described as having poor solubility in water, especially at low temperatures, but by adding surfactants the present invention has not experienced any problems of this nature. Surfactants are compounds that lower the surface tension between two liquids or between a liquid and a surface such that when it is mixed or added to the anti-algae liquid according to the present invention it is ensured that the active ingredient (DDAC) is able to penetrate for example a porous surface of wood, brick or ceramics or at least adhere to such surfaces in order for the active ingredients to be able to be retained and work against the algae.

Furthermore, the algae being biological organisms also have a surface layer which the surfactants help to penetrate/destroy such that the active ingredient can be active in exterminating the algae. This is of course particularly interesting with respect to very porous materials such as for example wood or brick where the anti-algae liquid according to the present invention is able to penetrate into the surface pores of such materials and will not be hampered or hindered by surface tension.

In a still further advantageous embodiment the DDAC concentration is between 8% and 12%, the surfactants in a concentration between 1% and 15%.

One of the further advantages of the present invention is that it is a water based liquid such that it may be produced with a relatively high concentration of the active ingredients and that before application to a surface the concentrated liquid may be diluted simply by adding water. Consequently, it is advantageous to manufacture the water-based anti-algae liquid with a relatively high concentration of the active ingredients and then in the manual for use make sure that the anti-algae liquid is diluted to the specified concentration. Tests have indicated that a concentration of the active ingredient DDAC equivalent to approximately 1 weight% is very effective such that by renewing the treatment yearly a durable and effective treatment against algae growth is provided.

In order to effectively combat algae an active use concentration of at least 1 weight % of DDAC is necessary. Furthermore when combatting mosses, the concentration shall be at least 2 weight-%. On the other hand when disinfecting against bacteria or mold the use concentration shall be approx. 0,025 % (actually use concentrations in the range 0,02% to 0,075 % are effective).

In a further advantageous embodiment between 1 weight-% and 5 weight-% siloxane is added to the liquid. The siloxane will increase the liquids ability to remain when applied to algae or moss infected areas, and thus prolong the effective reaction time of the liquid. The siloxane increases the resistance against the water-based anti-algae liquid being washed out, primarily by providing a closed hydrofob-like surface.

The invention is also directed at the use of the water-based anti-algae liquid as described above where the anti-algae treatment is applied to roofs, walls, terraces, paved surfaces, garden furniture and other surfaces made from plastics, metal, concrete, cement-based materials, brick, ceramics, bitumen roofing, EPDM, glass, wood.

Furthermore, almost any type of application method may be applied in order to place the water-based anti-algae liquid on the surfaces which it is desirable to treat such that the water-based anti-algae liquid for example may be applied by spraying, brushing, rolling or sponging. Of course, other appropriate methods may also be used with the present invention.

As such being evident from the non-limiting mentioning of materials suitable to be treated with the water-based anti-algae liquid, it is not a requirement for obtaining the desired effect that the surface is porous or in any other manner allows the liquid to penetrate into the material. Also relatively "closed surfaces", such as plastics and metal can be treated and obtain a long lasting effect.

In practice, the anti-algae liquid may be used on roofs, walls, furniture, particularly garden furniture, paved areas, green-houses and any other construction.

As the anti-algae liquid may contain surfactants, it is possible to treat both horizontal and vertical surfaces or any surfaces arranged at an angle or undersides of constructions. Also under surfaces such as for example the rear side of a tabletop may be treated as the surfactant provides for the anti-algae liquid to penetrate into the pores of the material to be treated such that it will still be effective.

If the anti-algae liquid is applied by spraying, nearby biological material such as for example bushes, trees or other plants should be screened from the spraying as the spraying may have a detrimental effect on plants as such.

The provision of the surfactants in the anti-algae liquid will in addition to providing that the active ingredient is made active against algae growth also provide an anti-smudge property which will also help to retain clean and non-polluted surfaces.

### Example

The below is an example of a composition of the liquid anti-algae according to the invention:
17 weight % DDAC
4 weight % surfactants
79 weight % distilled water.

This liquid was before application diluted by adding additional water, such that the DDAC concentration in the diluted liquid was ∼ 1 weight %.

Typically DDAC is delivered from the manufacturer as a suspension containing up to 20 % propanol and 30% water. Consequently, when formulating the composition according to the invention it is necessary to take the water content into account. Propanol being basically an isopropyl alcohol, will evaporate when the composition is applied and as such will not influence the "use" concentrations, and shall therefore not be included in the stoichiometry, when designing the composition.

The anti-algae liquid has also proven effective against bacteria. The use-concentration, that is the concentration in diluted state, ready for application, shall contain much less active compounds. Typically the use concentration of DDAC in bacteria applications will be between 0,02 % to 0,07 %.
In one test a diluted anti-algae liquid as disclosed above in preferred embodiments, was diluted such that the DDAC concentration in the use situation, i.e. prior to application was 0,025 %. This liquid was effective in disinfecting chicks and eggs, without being harmfull to the egg as such or the ambient environment, but nevertheless was extremely effective against the bacteria.

## Claims

1. A water-based anti-algae liquid comprising the following constituents in percentage by weight:
a. 1% to 20% DDAC;
b. 0% to 5% hydrotopes/surfactants
c. The remainder water

2. The water-based anti-algae liquid according to claim 1 wherein the DDAC concentration is between 8% and 12%, the surfactants in a concentration between 1% and 1,5%.

3. The water-based anti-algae liquid according to claim 1, where in use against bacteria the DDAC concentration in a diluted liquid is between 0,02 % and 0,075 %.

4. The water-based anti-algae liquid according to claim 1 or 2 which in use is diluted such that the DDAC concentration is equivalent to 1 weight % or more.

5. The water-based anti-algae liquid according to claim 1 wherein further between 1% and 5% siloxane is included in the liquid.

6. Use of the water-based anti-algae liquid according to any of claims 1 to 5 for anti-algae treatment of roofs, walls, terraces, paved surfaces, garden furniture and other surfaces made from plastics, concrete, cement-based materials, brick, ceramics, bitumen roofing, EPDM, glass, wood.

7. Application of the water-based anti-algae liquid according to any of claims 1to 5 on surfaces according to claim 6, where the water-based anti-algae liquid is applied by spraying, brushing, rolling, or sponging.
